# EUROPÄISCHE PATENTSCHRIFT

(11) **EP 0 993 931 B1**
(45) Veröffentlichungstag und Bekanntmachung des Hinweises auf die Patenterteilung: **05.03.2003**
(21) Anmeldenummer: 99118294.0
(22) Anmeldetag: 15.09.1999
(51) Int. Cl.: B29C 69/00, F16C 13/00

(54) **Laufrolle aus Kunststoff**
Plastic roller
Rouleau en plastique

(30) Priorität: 22.09.1998 DE 19843277
(43) Veröffentlichungstag der Anmeldung: 19.04.2000
(73) Patentinhaber: Hachtel, Friedrich, 73431 Aalen (DE)
(72) Erfinder: Hachtel, Friedrich, 73431 Aalen (DE)
(74) Vertreter: Möbus, Daniela, Dr.-Ing.

(56) Entgegenhaltungen:
- EP-A- 0 792 736
- EP-A- 0 924 055
- DE-A- 2 355 273
- GB-A- 1 250 750

## Beschreibung

Die Erfindung betrifft eine Laufrolle aus Kunststoff, insbesondere für Auszüge von Geschirrspülmaschinen, mit einer Lauffläche, die von zwei in axialer Richtung zusammengesetzten Teilen gebildet ist, und mit einer Lagerbuchse.

Eine solche Laufrolle und ein Verfahren zu seiner Herstellung ist bereits aus der EP 0 792 736 A1 bekannt.

Laufrollen an Auszügen von Geschirrspülmaschinen laufen auf Edelstahlschienen. Aufgrund der Reibung zwischen den beiden die Lauffläche bildenden Teilen und der Lagerbuchse ist jedoch ein Abrollen auf der Edelstahlschiene bei Belastung, beispielsweise wenn die Auszüge der Geschirrspülmaschine befüllt sind, nicht gewährleistet. Die Laufrolle schleift dann auf der Schiene. Dieses Problem lässt sich durch eine Veränderung des Radius der Laufbuchse im Verhältnis zum Radius der die Lauffläche bildenden Teile beseitigen. Dabei hat sich jedoch gezeigt, dass die Radiusdifferenz beträchtlich sein muss, um den gewünschten Effekt zu erzielen. Damit wäre jedoch eine vollständig neue Konstruktion der Laufrolle erforderlich.

Der vorliegenden Erfindung liegt die Aufgabe zugrunde, eine Laufrolle der eingangs genannten Art dahingehend zu verbessern, dass ein Abrollen der Laufrolle auf einer Schiene auch unter Belastung gewährleistet ist.

Die Aufgabe wird mit einer Laufrolle der genannten Art erfindungsgemäß dadurch gelöst, dass zwischen den beiden die Lauffläche bildenden Teilen und der Lagerbuchse eine Hülse aus einem Kunststoffmaterial mit guten Gleiteigenschaften angeordnet ist. Das Material dieser Hülse kann beispielsweise aus PTFE bestehen. Durch dieses Material wird die Reibung zwischen den die Lauffläche bildenden Teilen und der Lagerbuchse erheblich vermindert. Konstruktiv sind jedoch nur geringe Änderungen an der Laufrolle erforderlich. Die Lagerbuchse und die die Lauffläche bildenden Teile können entweder aus dem gleichen Kunststoffmaterial oder aber auch aus unterschiedlichen Kunststoffmaterialien gefertigt sein. Durch die eingesetzte Hülse aus einem hoch gleitfähigen Material kann die Lagerbuchse nun auch aus einem kostengünstigeren Kunststoff gefertigt werden als bisher, so dass die Mehrkosten durch die Fertigung der Hülse nahezu kompensiert werden können.

Das erfindungsgemäße Verfahren zur Herstellung der Laufrolle nach der Erfindung weist die Schritte auf:
- Spritzen der Hülse aus einem Kunststoffmaterial mit guten Gleiteigenschaften in einem Hohlraum einer Spritzgießform,
- öffnen der Spritzgießform, wobei die Hülse an einer Spritzgießformhälfte festgehalten wird,
- Gegeneinanderverdrehen der Spritzgießformhälften, bis die Hülse einem Hohlraum zum Gießen eines der die Lauffläche bildenden Teile gegenüberliegt,
- Schließen der Spritzgießform und Spritzgießen des ersten Laufflächenteils auf die Hülse,
- gleichzeitiges Spritzgießen des zweiten Laufflächenteils in einem anderen Hohlraum der Spritzgießform aus dem gleichen Kunststoffmaterial wie der erste Laufflächenteil,
- öffnen der Spritzgießform und dabei Festhalten der Hülse mit dem aufgespritzten ersten Laufflächenteil in der einen Spritzgießformhälfte und des zweiten Laufflächenteils in der anderen Spritzgießformhälfte,
- Gegeneinanderverdrehen der beiden Spritzgießformhälften, bis die Hülse und der erste Laufflächenteil dem zweiten Laufflächenteil gegenüberstehen,
- Montage der Teile durch Aufdrücken des zweiten Laufflächenteils auf den ersten Laufflächenteil mittels mindestens eines axial verschiebbaren Spritzgießformteils,
- Spritzgießen der Lagerbuchse aus dem gleichen oder einem anderen Kunststoffmaterial wie die beiden Laufflächenteile,
- Montage der Lagerbuchse durch Einpressen in die Hülse.

Auch die Lagerbuchse kann in der gleichen Spritzgießform wie die anderen Teile gegossen und nach Verdrehen der Spritzgießformhälften mittels eines axial verschiebbaren Teils der Spritzgießform in die Hülse eingepresst werden. Besteht die Lagerbuchse aus dem gleichen Material wie die beiden Laufflächenteile, so kann hierzu eine Zweikomponenten-Spritzgießmaschine verwendet werden. Bei unterschiedlichen Materialien für die Lagerbuchse und die Laufflächenteile ist hingegen eine Dreikomponenten-Maschine erforderlich. Eine Alternative besteht natürlich darin, nur die Hülse und die beiden Laufflächenteile in einer Zweikomponenten-Spritzgießmaschine zu gießen und zu montieren und anschließend in einem separaten Montageschritt die auf einer anderen Maschine und in einem anderen Material gefertigte Lagerbuchse in die Hülse der Laufrolle einzupressen. Dieses Verfahren wird nachfolgend anhand der Zeichnung näher beschrieben.

Es zeigen:
- Fig. 1: einen Querschnitt durch eine erfindungsgemäße Laufrolle;
- Fig. 2: einen vergrößerten Querschnitt durch die Laufflächenteile und die Hülse der Laufrolle aus Fig. 1;
- Fig. 3: einen Teilschnitt durch eine Spritzgießform im Bereich eines Hohlraums für die Hülse der Laufrolle aus Fig. 1;
- Fig. 4: einen Teilschnitt durch die Spritzgießform nach Fig. 3 im Bereich eines Hohlraums des ersten Laufflächenteils der Laufrolle aus Fig. 1;
- Fig. 5: einen Teilschnitt durch die Spritzgießform nach Fig. 3 im Bereich eines Hohlraums des zweiten Laufflächenteils der Laufrolle aus Fig. 1;
- Fig. 6: einen Teilschnitt durch die Spritzgießform nach Fig. 3 im Bereich der Montagestellen der Hülse und der beiden Laufflächenteile der Laufrolle aus Fig. 1;
- Fig. 7: eine schematische Darstellung der Anordnung der in den Fig. 3 bis 5 gezeigten Hohlräume in der Spritzgießform.

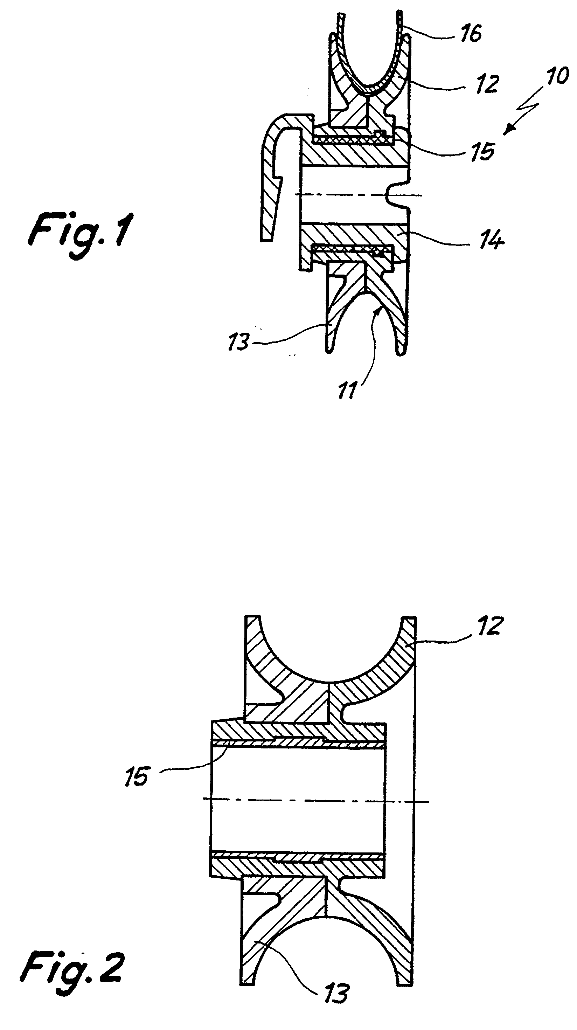

Fig. 1 zeigt eine Laufrolle 10, deren Lauffläche 11 von einem ersten Laufflächenteil 12 und einem zweiten Laufflächenteil 13 gebildet ist, wobei die beiden Teile 12 und 13 auf einer Lagerbuchse 14 angeordnet sind. Zwischen dem Laufflächenteil 12 und der Lagerbuchse 14 ist eine Hülse 15 aus einem gut gleitfähigen Material angeordnet. Diese Hülse 15 ermöglicht ein Abrollen der Laufrolle 10 auf einer Schiene 16, auch wenn die Rolle belastet ist.

In Fig. 2 sind die Teile 12, 13 und 15 in vergrößerter Darstellung gezeigt.

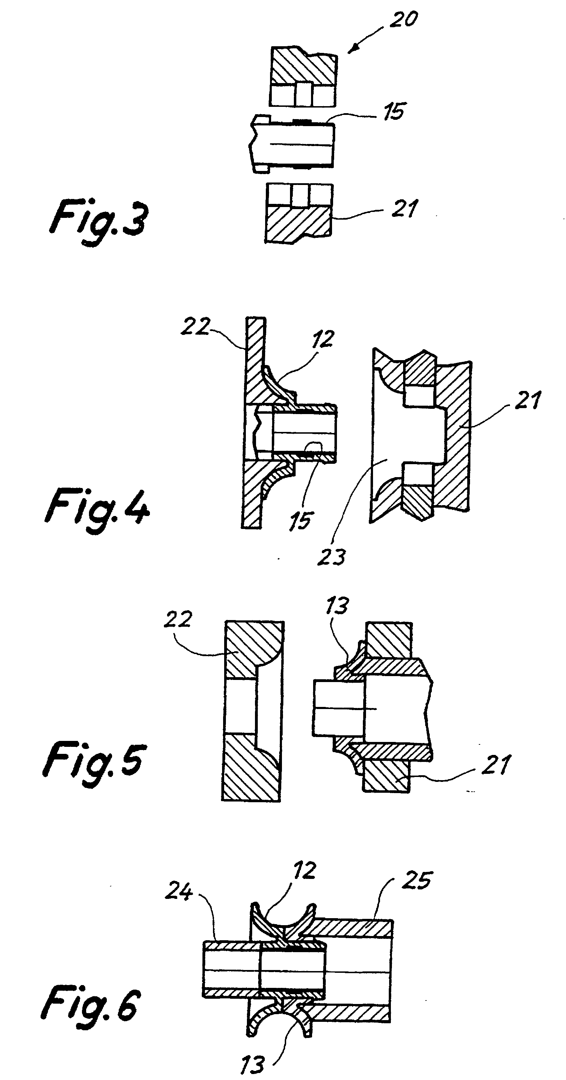

Die Fig. 3 bis 6 zeigen die Herstellung der einzelnen Teile in einer Spritzgießmaschine.

Fig. 3 betrifft das Spritzgießen der Hülse 15 aus einem gut gleitfähigen Kunststoff wie PTFE in einer Spritzgießform 20. Der Hohlraum zur Formung der Hülse 15 wird durch öffnen der rechten Spritzgießformhälfte 21 freigegeben. Die Hülse 15 wird an der in Fig. 4 gezeigten linken Spritzgießformhälfte 22 festgehalten. Anschließend werden die beiden Spritzgießformhälften 21 und 22 gegeneinander verdreht, bis die Hülse 15 einem Hohlraum 23 in der Spritzgießformhälfte 21 zur Formung des Laufflächenteils 12 gegenübersteht. Der Laufflächenteil 12 wird dabei auf die Hülse 15 gespritzt.

Fig. 4 zeigt den auf die Hülse 15 aufgespritzten Laufflächenteil 12. Beide Teile 12 und 15 werden gemeinsam in der Spritzgießformhälfte 22 festgehalten. Die beiden Spritzgießformhälften 21 und 22 sind geöffnet.

Gleichzeitig zum Spritzen des Laufflächenteils 12 erfolgt in einem anderen Hohlraum der Spritzgießform das Spritzgießen des zweiten Laufflächenteils 13, wie Fig. 5 zeigt. Der Laufflächenteil 13 wird nach dem öffnen der Spritzgießform 20 in der rechten Spritzgießformhälfte 21 festgehalten. Es werden dann die beiden Spritzgießformhälften 21 und 22 erneut gegeneinander verdreht, bis die Hülse 15 mit dem ersten Laufflächenteil 12 dem zweiten Laufflächenteil 13 gegenübersteht. Der Laufflächenteil 12 und der Laufflächenteil 13 werden mittels axial verschiebbarer Spritzgießformteile 24, 25 aufeinandergedrückt und damit montiert.

Abschließend erfolgt die Montage des Teileverbunds 12, 13, 15 auf die Lagerbuchse 14, was hier jedoch nicht näher dargestellt ist. Die Lagerbuchse 14 könnte ebenfalls in der Spritzgießform 20 gefertigt und in einem weiteren Montageschritt in die Hülse 15 eingepresst werden. Aber auch die Herstellung der Lagerbuchse 14 in einer anderen Maschine und eine Endmontage der Teile außerhalb der Spritzgießform ist möglich.

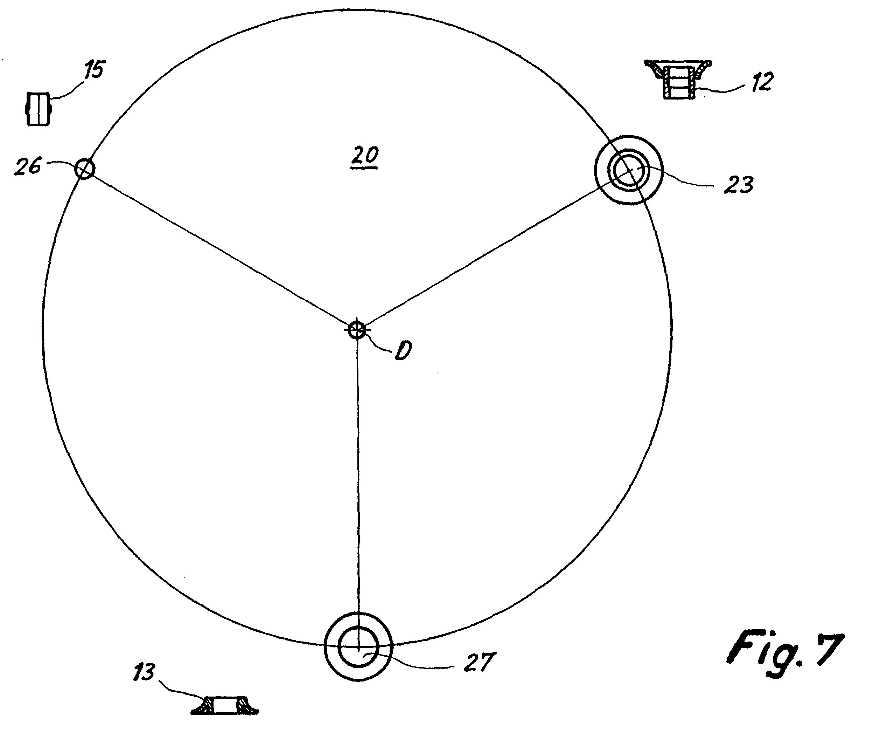

Fig. 7 zeigt schematisch die Anordnung der Hohlräume für die Hülse 15, den ersten Laufflächenteil 12 und den zweiten Laufflächenteil 13 in der Spritzgießform 20. Die Hohlräume sind jeweils um 120° voneinander beabstandet. Wie die Fig. 3 bis 6 zeigen, wird die Spritzgießform 20 von zwei Hälften gebildet, die um eine gemeinsame Drehachse D gegeneinander bewegbar sind, so dass die in den einzelnen Hohlräumen 23, 26 und 27 gefertigten Teile 12, 15, 13 nach entsprechendem Verdrehen der beiden Spritzgießformhälften 21 und 22 noch in der Spritzgießform 20 montiert werden können. Falls auch noch die Lagerbuchse 14 in der gleichen Spritzgießform 20 hergestellt werden soll, müsste ein vierter Hohlraum vorgesehen werden und alle Hohlräume um 90° voneinander beabstandet sein.

## Patentansprüche

1. Laufrolle aus Kunststoff, insbesondere für Auszüge von Geschirrspülmaschinen, mit einer Lauffläche (11), die von zwei in axialer Richtung zusammengesetzten Teilen (12, 13) gebildet ist, und mit einer Lagerbuchse (14), **dadurch gekennzeichnet, dass** zwischen den beiden die Lauffläche (11) bildenden Teilen (12, 13) und der Lagerbuchse (14) eine Hülse (15) aus einem Kunststoffmaterial mit guten Gleiteigenschaften angeordnet ist.

2. Laufrolle nach Anspruch 1, **dadurch gekennzeichnet, dass** die Hülse (15) aus PTFE gefertigt ist.

3. Laufrolle nach Anspruch 1 oder 2, **dadurch gekennzeichnet, dass** die Lagerbuchse (14) und die die Lauffläche (11) bildenden Teile (12, 13) aus dem gleichen Kunststoffmaterial gefertigt sind.

4. Laufrolle nach Anspruch 1 oder 2, **dadurch gekennzeichnet, dass** die Lagerbuchse (14) und die die Lauffläche (11) bildenden Teile (12, 13) aus unterschiedlichen Kunststoffmaterialien gefertigt sind.

5. Verfahren zur Herstellung einer Laufrolle nach einem der Ansprüche 1 bis 4 mit den Schritten:
- Spritzen der Hülse (15) aus einem Kunststoffmaterial mit guten Gleiteigenschaften in einem Hohlraum (26) einer Spritzgießform (20),
- öffnen der Spritzgießform (20), wobei die Hülse (15) an einer Spritzgießformhälfte (22) festgehalten wird,
- Gegeneinanderverdrehen der Spritzgießformhälften (21, 22), bis die Hülse (15) einem Hohlraum (23) zum Gießen eines der die Lauffläche (11) bildenden Teile (12) gegenüberliegt,
- Schließen der Spritzgießform (20) und Spritzgießen des ersten Laufflächenteils (12) auf die Hülse (15),
- gleichzeitiges Spritzgießen des zweiten Laufflächenteils (13) in einem anderen Hohlraum (27) der Spritzgießform (20) aus dem gleichen Kunststoffmaterial wie der erste Laufflächenteil (12),
- öffnen der Spritzgießform (20) und dabei Festhalten der Hülse (15) mit dem aufgespritzten ersten Laufflächenteil (12) in der einen Spritzgießformhälfte (22) und des zweiten Laufflächenteils (13) in der anderen Spritzgießformhälfte (21),
- Gegeneinanderverdrehen der beiden Spritzgießformhälften (21, 22), bis die Hülse (15) und der erste Laufflächenteil (12) dem zweiten Laufflächenteil (13) gegenüberstehen,
- Montage der Teile (12, 13, 15) durch Aufdrücken des zweiten Laufflächenteils (13) auf den ersten Laufflächenteil (12) mittels mindestens eines axial verschiebbaren Spritzgießformteils (24, 25),
- Spritzgießen der Lagerbuchse (14) aus dem gleichen oder einem anderen Kunststoffmaterial wie die beiden Laufflächenteile (12, 13),
- Montage der Lagerbuchse (14) durch Einpressen in die Hülse (15).

6. Verfahren nach Anspruch 5, **dadurch gekennzeichnet, dass** auch die Lagerbuchse (14) in der gleichen Spritzgießform (20) wie die anderen Teile (12, 13, 15) gegossen und nach Verdrehen der Spritzgießformhälften (21, 22) mittels mindestens eines axial verschiebbaren Teils der Spritzgießform (20) in die Hülse (15) eingepresst wird.

## Claims

1. Roller of plastics, especially for use in retraction from dishwashers, having a running surface (11) formed of two components (12, 13) fitted together in the axial direction, and having a bearing bush (14), **characterised in that** a shell (15) of plastics material having low friction characteristics is arranged between the bearing bush (14) and the two components (12, 13) that form the running surface (11).

2. Roller according to claim 1, **characterised in that** the shell (15) is made of PTFE.

3. Roller according to claim 1 or 2, **characterised in that** the bearing bush (14) and the two components (12, 13) that form the running surface (11) are made of the same plastics material.

4. Roller according to claim 1 or 2, **characterised in that** the bearing bush (14) and the two components (12, 13) that form the running surface (11) are made of different plastics materials.

5. Method of making a roller according to one of claims 1 to 4 having the following steps:
- injection moulding the shell (15) from a plastics material having low friction characteristics in a cavity (26) of an injection mould (20),
- opening the injection mould (20), the shell (15) being retained in an injection mould half (22),
- turning the injection mould halves (21, 22) relatively to each other until the shell (15) lies opposite a cavity (23) for injection moulding one of the components (12) that form the running surface (11),
- closing the injection mould (20) and injection moulding the first running surface component (12) onto the shell (15),
- simultaneously injection moulding the second running surface component (13) in another cavity (27) of the injection mould (20) of the same plastics material as the first running surface component (12),
- opening the injection mould (20) whilst retaining, in the first injection mould half (22), the shell (15) with the first running surface component (12) injection moulded onto it, and whilst retaining the second running surface component (13) in the other injection mould half (21),
- turning the two injection mould halves (21, 22) relatively to each other until the shell (15) and the first running surface component (12) are disposed opposite the second running surface component (13),
- assembling the components (12, 13, 15) by pushing the second running surface component (13) onto the first running surface component (12) by means of at least one axially displaceable injection mould component (24, 25),
- injection moulding the bearing bush (14) from the same or a different plastics material as the two running surface components (12, 13),
- assembling the bearing bush (14) by pressing it into the shell (15).

6. Method according to claim 5, **characterised in that** also the bearing bush (14) is moulded in the same injection mould (20) as the other components (12, 13, 15) and is pressed by means of at least one axially displaceable component of the injection mould (20) into the shell (15) after turning of the injection mould halves (21, 22).

## Revendications

1. Galet de roulement en matière plastique, en particulier pour panier extractible de lave-vaisselle, présentant une surface de roulement (11), qui est formée par deux parties (12, 13) assemblées dans la direction axiale, et avec un coussinet (14), **caractérisé en ce qu'**une douille (15) en une matière plastique présentant de bonnes propriétés de glissement, est disposée entre les deux parties (12, 13) formant la surface de roulement (11) et le coussinet (14).

2. Galet de roulement selon la revendication 1, **caractérisé en ce que** la douille (15) est fabriquée en PTFE.

3. Galet de roulement selon la revendication 1 ou 2, **caractérisé en ce que** le coussinet (14) et les parties (12, 13) formant la surface de roulement (11) sont fabriqués dans la même matière plastique.

4. Galet de roulement selon la revendication 1 ou 2, **caractérisé en ce que** le coussinet (14) et les parties (12, 13) formant la surface de roulement (11) sont fabriqués dans des matières plastiques différentes.

5. Procédé de fabrication d'un galet de roulement selon l'une des revendications 1 à 4, comportant les étapes suivantes :
- injection de la douille (15) en une matière plastique présentant de bonnes propriétés de glissement dans une cavité (26) d'un moule à injection (20),
- ouverture du moule d'injection (20), la douille (15) étant maintenue fermement sur une moitié (22) du moule d'injection,
- rotation l'une par rapport à l'autre des moitiés (21, 22) du moule d'injection, jusqu'à ce que la douille (15) se trouve face à une cavité (23) pour la coulée de l'une des parties (12) formant la surface de roulement (11),
- fermeture du moule d'injection (20) et moulage par injection de la première partie (12) de la surface de roulement sur la douille (15),
- moulage simultané par injection de la deuxième partie (13) de la surface de roulement dans une autre cavité (27) du moule d'injection (20), dans la même matière plastique que la première partie (12) de la surface de roulement,
- ouverture du moule d'injection (20) et fixation de la douille (15) avec la première partie (12) de la surface de roulement injectée dans une moitié (22) du moule d'injection et de la deuxième partie (13) de la surface de roulement dans l'autre moitié (21) du moule d'injection,
- rotation l'une par rapport à l'autre des deux moitiés (21, 22) du moule d'injection, jusqu'à ce que la douille (15) et la première partie (12) de la surface de roulement se trouvent face à la deuxième partie (13) de la surface de roulement,
- montage des parties (12, 13, 15) par pression de la deuxième partie (13) de la surface de roulement sur la première partie (12) de la surface de roulement au moyen d'au moins une partie (24, 25) du moule d'injection pouvant coulisser axialement,
- moulage par injection du coussinet (14) dans la même matière plastique ou dans une autre matière plastique que les deux parties (12, 13) de la surface de roulement,
- montage du coussinet (14) par enfoncement dans la douille (15).

6. Procédé selon la revendication 5, **caractérisé en ce que** le coussinet (14) est coulé aussi dans le même moule d'injection (20) que les autres parties (12, 13, 15), et après rotation des moitiés (21, 22) du moule d'injection, il est enfoncé dans la douille (15) au moyen d'au moins une partie, pouvant coulisser axialement, du moule d'injection (20).
